# EUROPEAN PATENT SPECIFICATION

(11) **EP 1 832 843 B1**
(45) Date of publication and mention of the grant of the patent: **05.10.2011**
(21) Application number: 06004719.8
(22) Date of filing: 08.03.2006
(51) Int. Cl.: G01C 21/34, G01C 21/36

(54) **Method and system for determining a route and for warning a driver**
Verfahren und System zur Routenbestimmung und Fahrerwarnung
Procédé et système de détermination d'un itinéraire et d'avertissement d'un conducteur

(43) Date of publication of application: 12.09.2007
(73) Proprietor: Harman Becker Automotive Systems GmbH, 76307 Karlsbad (DE)
(72) Inventor: Kropp, Michaela, 71101 Schönaich (DE)
(74) Representative: Bertsch, Florian Oliver

(56) References cited:
- EP-A- 1 186 862
- WO-A-2005/031266
- US-B1- 6 898 519
- S K DATLA, R S MOORTHY, K V KRISHNA RAO: "A GIS for Routing of Oversized and Hazardous Material Carrying Vehicles" MAP ASIA CONFERENCE 2004, [Online] 2004, pages 1-12, XP009070035 Beijing, China Retrieved from the Internet: URL:http://www.gisdevelopment.net/applicat ion/urban/products/pdf/ma04274.pdf> [retrieved on 2006-07-24]
- PATENT ABSTRACTS OF JAPAN vol. 2003, no. 12, 5 December 2003 (2003-12-05) -& JP 2004 198368 A (DENSO CORP), 15 July 2004 (2004-07-15)
- PATENT ABSTRACTS OF JAPAN vol. 2002, no. 12, 12 December 2002 (2002-12-12) -& JP 2002 236027 A (DENSO CORP), 23 August 2002 (2002-08-23)

## Description

### Background of the present invention

The present invention relates to navigation systems. In particular, the present invention relates to a method and system for route determination and a method and system for warning a driver of a vehicle.

Finding routes is a standard function of many navigation devices. Frequently, specific user-defined preferences may be taken into account for determining an optimum route, e.g., preferences such as avoiding ferries or avoiding highways, or shortest route and fastest route. The determination of a fastest route is typically based on road segment data, such as road segment length and speed limits for various types of road segments, but may also be based on characteristic travel speeds of various types of vehicles, such as cars, busses, and trucks.

While road and vehicle parameters that determine the time cost associated with traversal of a road segment, such as speed limits or characteristic travel speeds, are now routinely taken into account in determining optimum routes, other parameters, albeit being of more fundamental importance for many navigation purposes, are frequently not taken into account in route determination. In particular, there are road passage restrictions which prohibit passage of all vehicles, such as one-way restrictions, or of certain vehicles, such as vertical clearances or weight restrictions. Since one-way restrictions impose the same limitations for all vehicles, they may readily be taken into consideration when an optimum route is to be determined. However, one-way restrictions are the only passage restrictions that are routinely taken into account in route determination by navigation devices.

The wider class of passage restrictions which includes, but is not restricted to, a vertical clearance, a horizontal clearance, a curvature radius, a lane width, or a weight restriction of a road segment, which are passage restrictions that apply to specific vehicles only, is typically not taken into account in route determination or for other navigation purposes.

The article by S K Datla, R S Moorthy and K V Krishna Rao: "A GIS for Routing of Oversized and Hazardous Material Carrying Vehicles", MAP ASIA CONFERENCE 2004, which serves as basis for the preamble of claims 1 and 17, describes an automatic procedure for routing of industrial freight vehicles, in which the width of road, type of road, vertical clearance restrictions under flyovers and adequacy of bridges are considered as constraints. In the procedure, links are disabled from a network if a clearance restriction is not satisfied.

EP 1 186 862 A2 discloses a method for route determination in which a subset of roads is excluded from route determination based on a comparison of vehicle characteristics to information regarding usage constraints of the roads.

JP 2002 236027 A, which serves as basis for the preamble of claims 7 and 22, discloses a method in which information on a vehicle including data of overall height, total weight and width are obtained and compared to information on the limits to the vehicle for each road of map data. Based on the comparison, a display color of roads is changed.

WO 2005/031266 A1 discloses a system and method of using map data in which road elements are extracted from a route and it is determined whether the road elements could restrict the vehicle of travelling along the route. If a travelling restriction could be caused, the driver is alerted.

Therefore, there exists a need in the art for providing an improved navigation device, in particular, for improved methods and systems for route determination and for warning a driver of a vehicle.

### Summary of the Invention

According to the present invention, this need is addressed by a method for determining a route according to claim 1, a method for warning a driver of a vehicle according to claim 7, a system for determining a route according to claim 17, and a system for warning a driver of a vehicle according to claim 22. The dependent claims define preferred or advantageous embodiments of the invention.

A method for determining a route for a vehicle according to the present invention comprises the steps of providing road segment passage restriction information for a plurality of road segments, providing vehicle passage restriction data characterizing the vehicle, and determining a route for the vehicle based on both the vehicle passage restriction data and the road segment passage restriction information. Since the determination of the route is based on both the vehicle passage restriction data and the road segment passage restriction information, this method allows road segment passage restrictions to be taken into account that are relevant for vehicles having specific parameters only. Note that, here, the term "road segment passage restriction information" refers to information associated with a road segment that may be relevant for determining whether a vehicle may pass through a road segment or not. The term "vehicle passage restriction data" refers to corresponding data characterizing a vehicle, which data are relevant in order to determine whether the vehicle is allowed or able to traverse a road segment or not. It should be noted that, if road segments have a passage restriction such as a vertical clearance, the optimum route may vary from one vehicle to another. With the method according to the present invention, routes can be determined for various types of vehicles, taking into account this road segment passage restriction information. The route determination can be adapted to the vehicle itself taking into account different vehicle characteristics.

In one embodiment, the road segment passage restriction information may be a single numerical value that corresponds, e.g., to a vertical or horizontal clearance or a weight restriction of the road segment. According to the invention, first and second passage threshold values are determined based on the passage restriction information of a road segment and, subsequently, the route is determined based on the vehicle passage restriction data and each one of the first and second passage threshold values. The provision of first and second passage threshold values adds convenience to the method for determining a route, as it allows additional user-defined preferences to be taken into account. In particular, the first passage threshold value may be set as an absolute limit value for traversal of the road segment, i.e., if this value is exceeded, it is impossible for the vehicle to traverse the road segment, while the second passage threshold value may define a safety margin, i.e., if this second value is exceeded and if the first value is not exceeded, passage through the road segment may still be possible, but the driver of the vehicle will need to exercise extra caution.

The first and second passage threshold values of a given road segment may be determined in a variety of ways. For example, the road segment passage restriction information may explicitly contain both the first and the second passage threshold values, such that theses values may be directly read off. Alternatively, the road segment passage restriction information may contain only the first passage threshold value, whereas the second passage threshold value is computed by subtracting a safety margin value from the first passage threshold value. The safety margin may, in turn, be a fixed value or may be determined or entered by a user. The versatility afforded is an added benefit of the present method.

The method of the present invention may be easily combined with conventional methods for determining a route. In particular, in many of these conventional methods, a route is determined by computing a cost function based on weighting factors associated with the various road segments, which weighting factors may, e.g., represent a road segment length or a road segment traversal time. In this case, the step of determining a route according to the present invention may be achieved by comparing the vehicle passage restriction data with the passage restriction information of a road segment and, depending on the result of this comparison, adjusting the weighting factor of the corresponding road segment. This process will typically be repeated for a plurality of road segments, preferably for all road segments stored in the working memory unit that are taken into account for determining a route to the destination. Thereafter, the route may be determined using conventional methods employing the computation of a cost function. Therefore, a method for determining a route according to the present invention may be easily incorporated into existing methods for determining routes.

As first and second passage threshold values are determined, the weighting factor of a road segment may be adjusted in dependence on a comparison of the vehicle passage restriction data with the first passage threshold value and a comparison of the vehicle passage restriction data with the second passage threshold value. In particular, if the vehicle passage restriction data, e.g., a vehicle height, a vehicle width, or a vehicle weight, is smaller than the smaller one of the first and second passage threshold values of the road segment, in one embodiment of the present invention, the weighting factor of the road segment is not changed, i.e. influenced by the comparison of the road segment passage restriction data to the vehicle passage restriction data. By contrast, if the vehicle passage restriction data is larger than both the first and the second passage threshold value, the weighting factor of the road segment is increased, typically to a large value, e.g., infinity. If the vehicle passage restriction data is comprised within the interval defined by the first and second passage threshold values, the weighting factor of the road segment may also be increased, either additively or multiplicatively, albeit the increment will typically be less than in the case in which the vehicle passage restriction data is larger than both passage threshold values. In this way, road segments that cannot be traversed by the vehicle are avoided, while road segments which require the driver to take extra caution are made less favourable, while the weighting factors of all remaining road segments are not changed. Again, the adjusting of weighting factors may be based on user preferences, which allows, e.g., the user to specify whether roads which require extra caution are to be avoided. The adjusting of weighting factors therefore also adds versatility and convenience to the method.

Preferably, the vehicle passage restriction data is easily adjustable at any time. In case the vehicle passage restriction data is set to a new value while an active route has already been computed and is currently traversed, the route determination does not necessarily need to be carried out again. Rather, once it is determined that the vehicle passage restriction data is set to a new value, this new value may be compared with passage restriction information of all remaining road segments of the active route. Only if the new value of the vehicle passage restriction data exceeds, e.g., the first passage threshold value of one of the remaining road segments, a new route determination is initiated. In this way, computational costs may be reduced.

A method for warning a driver of a vehicle according to the present invention comprises the steps of providing road segment passage restriction information for a road segment, providing vehicle passage restriction data characterizing the vehicle, comparing the vehicle passage restriction data with the passage restriction information of the road segment and, depending on the result of the comparison, outputting a warning signal. Since the outputting of a warning signal is dependent on both the vehicle passage restriction data and the road segment passage restriction information, the warning signal may indicate whether passage through a road segment is allowed for a specific vehicle or not.

The method may further comprise the steps of determining an active road segment on which a vehicle is located or which the vehicle is approaching, a warning signal being output depending on the result of a comparison of the vehicle passage restriction data with the passage restriction information of the active road segment. In this way, the driver receives a warning that is related to the road segment which is currently of most relevance to the driver.

If an optical output device is provided which shows, e.g., a portion of a map of a neighbourhood of the current vehicle position, the method for warning a driver may further comprise the step of determining the set of road segments displayed by the optical output device, and comparing the vehicle passage restriction data with the passage restriction information of each one of the road segments displayed on the output device and outputting a respective warning signal. Such warning signals may include icons displayed on the optical output device, or a color coding indicating whether road segments may be traversed by the vehicle or not or whether extra caution is to be taken. In this way, the driver receives warning signals relating to a plurality of road segments in the neighbourhood of the current vehicle position which allows him, e.g., to choose alternative routes.

The warning signal may be selected from a visible warning signal or an audible warning signal. A visible warning signal may consist in or comprise icons displayed on a navigation device screen, or a color coding of road segments displayed on the screen. An audible warning signal may, e.g., be a voice output or a sound signal.

According to an aspect of the invention, in order to determine whether a warning signal is to be output, a first and second passage threshold value are determined based on the passage restriction information of the road segment. In the method for warning a driver, the definition and determination of the first and second passage threshold values is the same as in the method for determining a route described above, such that reference is made to the above as regards the detailed description of the first and second passage threshold values, and the various methods for their determination. In the method, the vehicle passage restriction data is compared with both the first and the second passage threshold value, and the warning signal is output in dependence on the results of both comparisons. In particular, if the vehicle passage restriction data is larger than both the first and the second passage threshold value, a first warning signal may be output, while, if the vehicle passage restriction data is comprised in the interval between the first and the second passage threshold value, a second warning signal different from the first warning signal is output. By contrast, if the vehicle passage restriction data is smaller than both the first and the second passage threshold value, no warning signal is output at all. In this way, the driver may receive a warning signal indicating whether a vehicle cannot pass the road segment at all, whether extra caution is to be exercised, or whether no extra caution is to be taken when traversing the road segment. It is also possible to combine the visual and the audio warning, e.g. in cases where the vehicle restriction data exceed both threshold values.

In both the method for determining a route and the method for warning a driver as described in any one of the embodiments above, the road segment passage restriction information may be selected from a group comprising a vertical clearance, a horizontal clearance, a curvature radius, a lane width or a weight restriction. However, the passage restriction information is not limited thereto, but may be any information that indicates that passage through the road segment is impossible for specific types of vehicles. The vehicle passage restriction data may be selected from a group comprising a vehicle height, a vehicle width, a vehicle axle base and/or number of axles, a vehicle length, a vehicle turning circle radius or a vehicle weight. As used herein, the terms vehicle height, width and length typically refer to total dimensions of the vehicle and any objects attached thereto, e.g., roof bike racks, roof luggage racks, rear bike or luggage racks, or similar. Similarly, the term vehicle weight refers to the total weight of the vehicle, passengers and any load, such as cargo. Again, the vehicle passage restriction data is not restricted thereto but may be any data characterizing the vehicle and relevant for passage restrictions.

Further, both in the method for determining a route and in the method for warning a driver, the vehicle passage restriction data may either be input by a user or may be automatically determined. The input of vehicle passage restriction data by a user has the advantage of being associated with little technical complexity, while the automatic determination of the vehicle passage restriction data may result in added convenience and accuracy.

The method for warning a driver as described in any one of the embodiments above can easily be integrated with the method for determining a route as described in any one embodiment above. However, the method for warning a driver may also be carried out separately, i.e., if there is no active route.

A system for determining a route for a vehicle according to the present invention comprises a first storage unit containing road segment passage restriction information, a second storage unit containing vehicle passage restriction data characterizing the vehicle, a working memory unit for storing a subset of the road segment passage restriction information and the vehicle passage restriction data, and a processing unit that is coupled to the working memory unit and adapted to determine a route based on both the road segment passage restriction information and the vehicle passage restriction data. This system is adapted to perform the method for determining a route according to the present invention. In particular, this system is designed to determine a route based on both the road segment passage restriction information and the vehicle passage restriction data which makes it possible to determine a route that takes into account the passage restriction data of a specific vehicle and the road segment passage restriction information relevant thereto.

The first storage unit may be a replaceable storage unit, such as a CD-ROM, a DVD, a hard disk or a storage card, such as an SD-card, having the road segment passage restriction information stored thereon. The second storage unit may, e.g., be a hard disk of a navigation device, or may be identical to the working memory unit. The first and the second storage units need not be separate storage units, the different data can also be stored on one single unit such as the hard disk. Further, the first storage unit may also be external to the vehicle, road segment passage restriction information being transmitted to other components of the system, e.g., via radio waves.

According to the invention, the processing unit is adapted to determine first and second passage threshold values based on the passage restriction information of road segments. More specifically, the processing unit may be adapted to determine the first and second passage threshold values for each one of the road segments, the corresponding data of which is stored in the working memory unit, and to store the corresponding first and second passage threshold values in the working memory unit for further processing. In this way, the benefits associated with the definition of first and second passage threshold values may be harnessed which have been explained in detail above.

Further, the system may comprise a third storage unit containing road segment weighting factors. The third storage unit may be different from or identical to the first storage unit. The provision of road segment weighting factors is important in systems in which the determination of a route is based on the computation of a cost function. In this embodiment, the working memory unit is further adapted to store a subset of the road segment weighting factors, and the processing unit is adapted to adjust the weighting factors stored in the working memory unit in dependence on a comparison of the vehicle passage restriction data with the road segment passage restriction information. In this embodiment, the processing unit may subsequently carry out standard steps for determining a route based on the adjusted weighting factors stored in the working memory unit.

The system may further comprise detection means for automatically determining the vehicle passage restriction data, and means for transferring the vehicle passage restriction data determined by the detection means to the second storage unit. In this way, the vehicle passage restriction data may be determined automatically, adding convenience to the system. The detection means may comprise means for automatically determining a vehicle length, e.g., using means for automatically determining whether a trailer is coupled to the vehicle. The detection means may also comprise means for automatically determining a vehicle height, e.g., in the form of a distance measuring device based on laser interferometry, or means for automatically determining a vehicle weight, e.g., in the form of a scale over which the vehicle passes and which transmits the weight information via radio waves.

The system for determining the route according to the present invention is preferably adapted to perform the method for determining a route according to any one embodiment of the present invention.

A system for warning a driver of a vehicle according to the present invention also comprises a first storage unit containing road segment passage restriction information, a second storage unit containing vehicle passage restriction data characterizing the vehicle, a working memory unit for storing road segment passage restriction information of at least one road segment and the vehicle passage restriction data, a processing unit coupled to the working memory unit and adapted to compare the passage restriction information of the road segment with the vehicle passage restriction data, and an output unit coupled to the processing unit to receive a control signal from the processing unit and adapted to output a warning signal based on the control signal. The functions of the first and second storage unit and of the working memory unit of the system for warning a driver are similar to the functions of the corresponding components in the system for determining a route described above. In the system for warning a driver, however, the processing unit is adapted to output a control signal to an output unit which, in turn, is adapted to output a warning signal based on the control signal. Therefore, this system allows a warning signal to be output depending on the result of a comparison of the road segment passage restriction information with the vehicle passage restriction data, as it is carried out by the processing unit.

The system may further comprise position determining means for determining a current vehicle position and adapted to provide the current vehicle position to the processing unit. In this way, the processing unit may determine an active road segment on which the vehicle is currently located or which the vehicle is approaching, and may thus determine whether a warning signal is to be output for the active road segment.

According to the invention, the processing unit is, again, adapted to determine first and second passage threshold values of the road segment based on the passage restriction information, and to output a first or second control signal in dependence on the result of the comparison of the vehicle passage restriction data with the first and second passage threshold values, respectively. The output unit is adapted to output a first or second warning signal in response to receiving the first or second control signal, respectively. In this way, different warning signals may be output depending on whether the vehicle is prevented from traversing the road segment due to a passage restriction, or whether extra caution is to be exercised upon traversal of the road segment.

The output unit may be an optical or an acoustical output device, e.g., the screen or the loudspeaker of a navigation device. The output unit may, however, also be separate from the navigation device. For example, the output unit may be comprised by an instrument cluster interfacing the navigation device and adapted to receive control signals therefrom.

Further, the system for warning a driver is preferably adapted to perform the method for warning a driver according to any one embodiment described above.

The main field of application of the present invention will be navigation devices, in particular, navigation devices for commercial vehicles or cars.

### Brief description of the drawings

Additional features and advantages of the present invention will become more readily appreciated from the following detailed description of preferred or advantageous embodiments with reference to the accompanying drawings.

Fig. 1 shows a schematic block diagram of a system for determining a route and for warning a driver according to an embodiment of the present invention.

Fig. 2 shows a schematic illustration of a set of road segments.

Figs. 3A and 3B show flowcharts representing a method for determining a route according to an embodiment of the invention and a sub-routine thereof, respectively.

Fig. 4 shows a flowchart representing a method for determining a route according to another embodiment of the invention.

Fig. 5 shows a flowchart representing a method for warning a driver of a vehicle according to an embodiment of the invention.

Fig. 6 shows a schematic illustration of an optical output device of a system for warning a driver according to an embodiment of the invention.

Fig. 7 exemplarily illustrates a possible definition of passage threshold values and of vehicle passage restriction data.

### Description of preferred embodiments

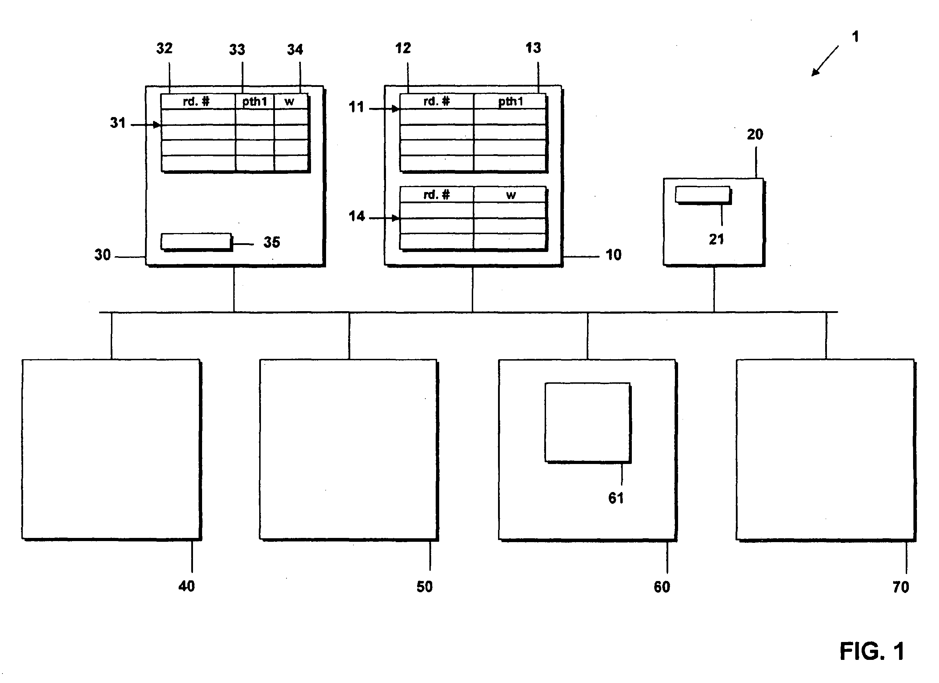

First, with reference to Fig. 1, a system 1 will be explained which is designed to both operate as a system for determining a route according to an embodiment of the invention and as a system for warning a driver of a vehicle according to an embodiment of the invention. The system comprises a storage unit 10, typically a CD-ROM or a DVD, an additional storage unit 20 and a working memory unit 30. Further, the system comprises a processing unit 40, an input unit 50, an output unit 60, and a warning unit 70.

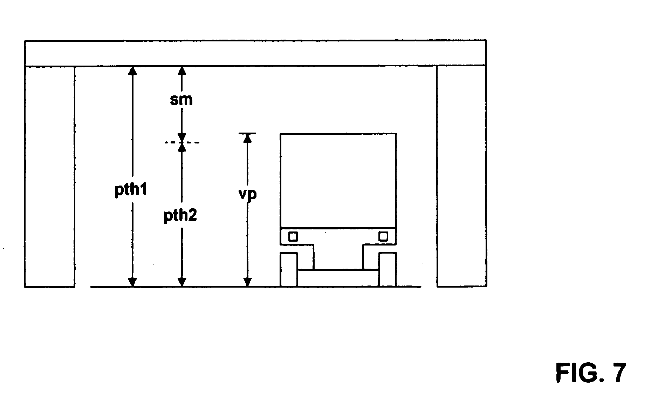

The storage unit 10 contains road segment passage restriction information and road segment weighting factors, both of which typically have the form of a data array 11 and 14, respectively. The data may be organized such that road segments are labelled, e.g., using increasing numbers, and the road segment passage restriction information is stored on the first storage unit in the form of a table having two columns 12 and 13, the first column identifying a road segment and the second column containing the corresponding passage restriction information. In the example shown, the passage restriction information for each road segment consists of a single numerical value, the first passage threshold value pth1, which represents a value that may not be exceeded by a vehicle traversing the road segment. For example, the first passage threshold value pth 1 may correspond to a vertical clearance of a road segment, as indicated schematically in Fig. 7. Of course, the passage restriction information may also have a more complex form and, e.g., may consist of several numerical values. Road segment weighting factors w are stored on the storage unit 10 in a second data array 14 that is organized similarly to the first data array 11.

The additional storage unit 20 contains vehicle passage restriction data 21. This vehicle passage restriction data that characterizes the vehicle and may, e.g., correspond to a vehicle height, a vehicle width, a vehicle axle base and/or number of axles, a vehicle length, a vehicle turning circle radius, or a vehicle weight may have the form of a single numerical value or of a number array. The additional storage unit 20 may be an internal hard disk of a navigation device or, if the navigation device is not equipped with a hard disk, may be identical to the working memory unit.

In the working memory unit 30, data is stored for further processing. In particular, the working memory unit 30 contains road segment passage restriction information and road segment weighting factors for a subset of road segments, e.g., in the form of a data array 31 having three columns 32-34 which correspond to the road segment number, the corresponding passage restriction information, and the corresponding weighting factor, respectively. Further, a copy of the vehicle passage restriction data 35 is also stored in the working memory unit.

The processing unit 40 is adapted to perform mathematical operations on data stored in the working memory unit 30. In particular, the processing unit 40 is adapted to compare numerical values stored in the working memory unit 30 or to update such numerical values. Further, the processing unit 40 is coupled to and adapted to provide signals to the output unit 60 and the warning unit 70. In the example shown, the output unit 60 comprises a screen 61. The input unit 50 is provided for entering vehicle passage restriction data and/or other data relevant to route determination.

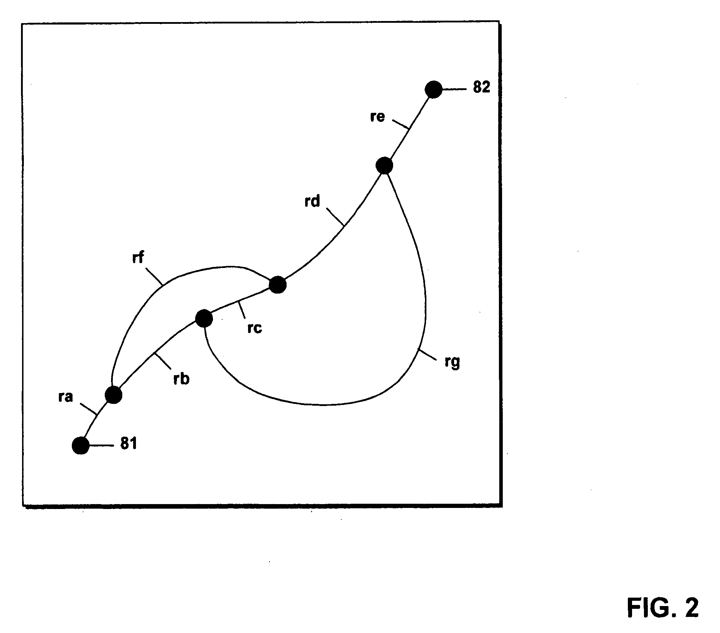

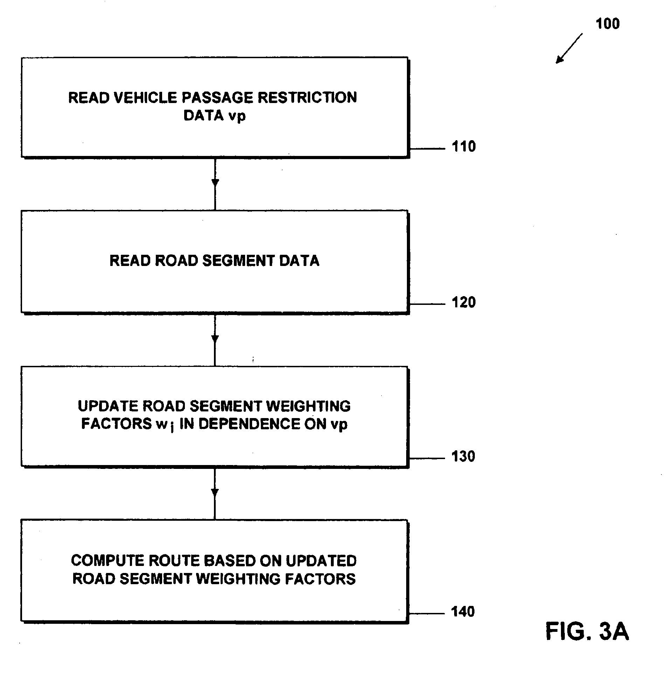

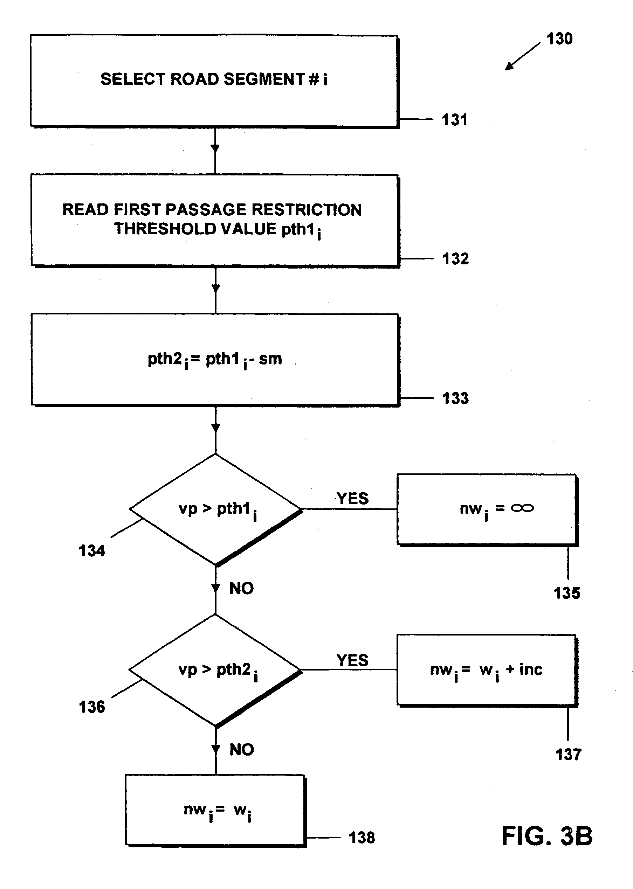

With reference to Figs. 2 and 3, a method for determining a route will be described next. Fig. 2 shows an exemplary set of road segments ra-rg, linked via road segment vertices indicated by full circles. For illustration purposes, it will be assumed that a shortest route is to be determined. In this case, the road segment weighting factors correspond to the respective road segment length. Further, it will be assumed, for illustration purposes, that the road segments rc and rf have a finite vertical clearance, whereas all other road segments do not have a passage restriction as regards vehicle height. Of course, this is only illustrative and the road segments may exhibit any other type of passage restriction, or various road segments may exhibit different types of passage restrictions. Returning to the above example, assuming further that the vertical clearance of the road segment rc is lower than the one of the road segment rf, an optimum route from a start point 81 to a destination 82 will be different for vehicles having different heights. For a vehicle having a vehicle height lower than the vertical clearance of the road segment rc, the optimum route will traverse road segments ra, rb, rc, rd and re. For a vehicle having a height higher than the vertical clearance of the road segment rc but lower than the vertical clearance of the road segment rf, a shortest route will traverse road segments ra, rf, rd and re. Finally, for a vehicle having a vertical height higher than the vertical clearance of the road segment rf, a shortest route will traverse the road segments ra, rb, rg and re.

In order to determine a route for a specific vehicle, in the system of Fig. 1, the vehicle height or other relevant passage restriction data will be entered using the input unit 50 and will be stored in the storage unit 20. Subsequently, the following steps will be performed, as illustrated in Fig. 3. First, at step 110, the vehicle passage restriction data vp which, in the present case and as schematically illustrated in Fig. 7, corresponds to a vehicle height will be read from the additional storage unit 20 and stored in the working memory unit 30. Subsequently, at step 120, road segment data that is relevant for the determination of the route is read from the storage unit 20 and is stored in the working memory unit 30. In particular, the data will comprise road segment weighting factors and road segment passage restriction information for at least a subset of road segments. For a realistic road network of, e.g., a European country or the USA, the full road network data can typically not be read into the working memory unit 30. Rather, a subset of roads will be selected based on, e.g., a hierarchy of roads such as highways or regional roads. In an alternative embodiment of the present invention that is not shown in the figures, road segment passage restriction information is compared with vehicle passage restriction data at step 120. Based on the result of this comparison, the road segment data of specific road segments may not even have to be included into the data stored in the working memory unit 30, e.g., if the road segment passage restriction information prohibits the vehicle from traversing the road segment. In a conventional method and system for determining a route, next, a route would be computed based on minimization of a cost function, the latter representing a sum of weighting factors of road segments traversed. This step, indicated at 140, is usually carried out using well-known algorithms.

However, in the system and method according to the present invention, at step 130, the road segment weighting sectors wᵢ of the road segments i stored in the working memory unit 30 are updated in dependence on the vehicle passage restriction data vp and the road segment passage restriction information of these road segments. Once the weighting factors wᵢ of the road segments stored in the working memory unit have been updated according to the method described in more detail below, the route is determined using standard methods, such as minimization of a cost function employing an A* algorithm or Dijktra's algorithm, but based on the road segment weighting factors that have been updated in dependence on the vehicle passage restriction data and the road segment passage restriction information.

Next, with reference to Fig. 3B, the step 130 of updating road segment weighting factors will be explained in more detail. First, at step 131, a road segment having number i is selected. Note that, although not shown in this figure, the subroutine illustrated in Fig. 3B is typically repeated for each of the road segments stored in the working memory unit. Next, at step 132, the first passage restriction threshold value pth1i that, in the present case, corresponds to the road segment passage restriction information, is identified in the data stored in the working memory unit. At step 133, the second passage restriction threshold value pth2i of the road segment is computed by subtracting a safety margin sm from the first passage restriction threshold value. For an illustration of the definition of the second passage restriction threshold value and the safety margin, reference is made to Fig. 7, that exemplarily shows a road segment having a vertical clearance pthlᵢ. The safety margin sm defines an interval in which the vehicle may pass the road segment, but, if the vehicle height exceeds the second passage restriction threshold value pth2, extra caution may need to be exercised by the driver of the vehicle.

The safety margin can be determined in a variety of ways. In one embodiment, the safety margin sm has a fixed numerical value. In another embodiment, the safety margin sm is defined by a value input by a user and stored in a memory unit or a storage unit of the navigation device. In yet another preferred embodiment, the safety margin is computed in dependence on the vehicle passage restriction data, e.g., as sm = 0,1 · vp. Alternatively, rather than computing the second passage restriction threshold value at step 133, both the first and the second passage restriction threshold value may be comprised by the road segment passage restriction information, such that both of these values can be directly read from the storage unit 10.

Once both the first and the second passage restriction passage value have been determined, at step 134, the vehicle passage restriction data vp is compared with the first passage restriction threshold value. If the vehicle passage restriction data, e.g., the vehicle height, exceeds the first passage restriction threshold value, e.g., the vertical clearance of the road segment, at step 135, the road segment weighting factor is set to a new updated value nwᵢ which is infinity or another large value. If the vehicle passage restriction data does not exceed the first passage restriction threshold value, next, at step 136, the vehicle passage restriction data vp is compared with the second passage restriction threshold value pth2i. If the vehicle passage restriction data vp is comprised within the interval defined by the first and the second passage restriction threshold values, at step 137, the weighting factor is updated to a new weighting factor nwᵢ that is given by the original weighting factor wᵢ plus an increment inc. In an embodiment, the increment inc is a fixed value. In another embodiment, the increment inc is determined from a user input. The updated weighting factor can also be computed multiplicatively rather than additively, e.g., by multiplying the original weighting factor wᵢ by a number larger than 1. If the road segment passage restriction data is smaller than both the first and the second passage restriction threshold value, as indicated at step 138, the updated weighting factor nwᵢ is equal to the original weighting factor wᵢ.

In the subroutine for updating road segment weighting factors as illustrated in Fig. 3B, the updating rules indicated at steps 135, 137 and 138 ensure that a passage through road segments that may not be passed by the vehicle is made impossible, while passage through road segments in which the driver has to exercise extra caution is made less favourable.

Frequently, the vehicle passage restriction data may change, e.g., due to a truck being loaded or unloaded or a trailer being coupled to a vehicle. In such a case, a new route may be determined based on the method as shown in Fig. 3. However, in another embodiment of the present invention, a new route is determined only under specific circumstances, as will be explained next.

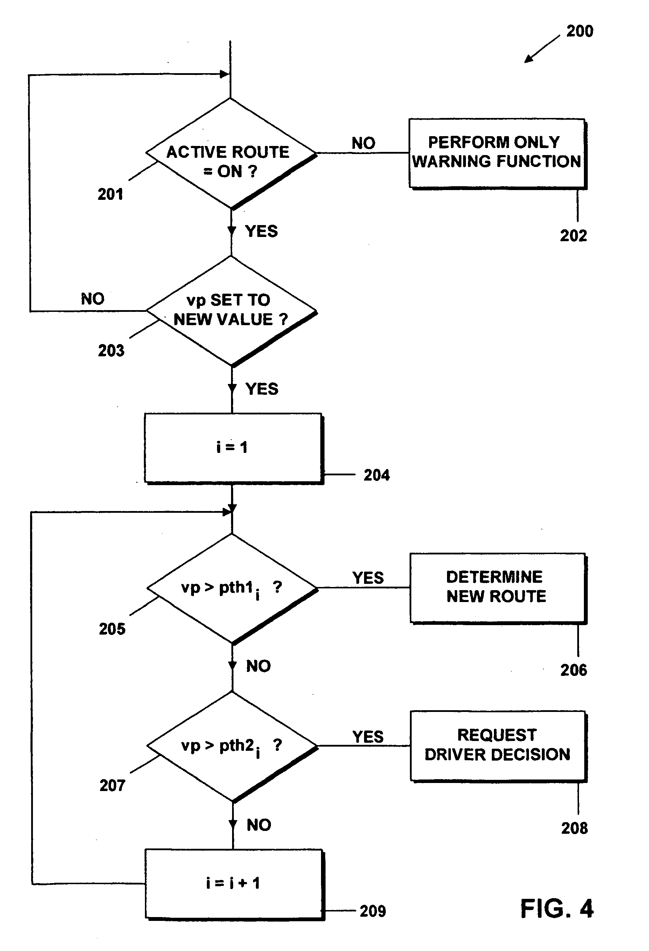

With reference to Fig. 4, a method for determining a route is illustrated, the method being generally indicated by 200. First, at steps 201-203, it is determined whether there is an active route and whether the vehicle passage restriction data vp is set to a new value. If there is not active route, only warning functions will be performed, which will be described in more detail below. Once the system determines that there is an active route and that the vehicle passage restriction data is set to a new value, an iteration over all remaining road segments of the active route is initiated at steps 204-209. For simplicity, the remaining road segments are labelled by numbers i. At steps 205 and 207, the new value of the vehicle passage restriction data vp is compared with the first and second passage threshold values pth1i and pth2i, respectively, of the road segment. If the vehicle passage restriction data is found to exceed the first road segment passage threshold value, at step 206, the computation of a new route is initiated automatically. If, for one of the road segments, the vehicle passage restriction data is found to exceed the second passage threshold value pth2, at 208, a driver decision is requested as to whether a new route determination is to be initiated. Alternatively, at step 208, a new route determination can also be initiated automatically if the driver prefers to avoid road segments in which extra caution is to be exercised. In the method indicated in Fig. 4, the first and second passage threshold values are determined in the same way as explained with reference to Fig. 3 above.

The method shown in Fig. 4 is the method performed in case the vehicle passage restriction data is increased. However, the method may also be readily adapted to the case in which the vehicle passage restriction data is decreased. In this case, the route originally determined, can still be traversed by the vehicle. However, there may be a better route if the new vehicle passage restriction data is taken into consideration. Therefore, if the vehicle passage restriction data is decreased, the determination of a new route may be initiated in case the system determines that, in the original route determination, the traversal of certain road segments has been excluded because of the original vehicle passage restriction data exceeding their first passage threshold value. In such a case, a new route can be determined, taking into consideration the road segments that have been omitted in the original route determination.

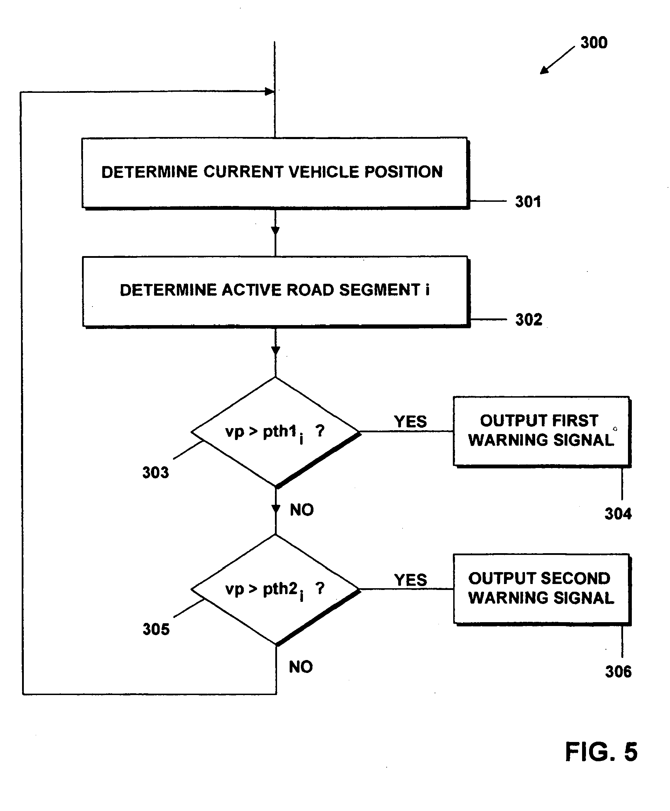

With reference to Fig. 5, a method for warning a driver of a vehicle according to an embodiment of the present invention will be described next. The system 1 shown in Fig. 1 is also adapted to perform this method. The method may be performed irrespective of whether there is an active route or not.

In one embodiment of the method, generally indicated at 300 in Fig. 5, a position determining means (not shown in Fig. 1) determines a current vehicle position at step 301. The data is transmitted to the processing unit which, at step 302, determines an active road segment. The active road segment is the road segment which the vehicle is currently located on or which the vehicle is approaching. At steps 303 and 305, the vehicle passage restriction data, which is entered in the same way as indicated with reference to Figs. 1 and 3 above, is compared with both the first and the second passage threshold value of the active road segment, respectively. The first and second passage threshold values are determined in the same way as described with reference to Fig. 3 above. If, at step 303, the vehicle passage restriction data is determined to exceed the first passage threshold value, at step 304, the system outputs a first warning signal. In contrast, if the vehicle passage restriction data is found to be comprised within the interval defined by the first and the second passage threshold values, at step 306, a second warning signal is output. The second warning signal is typically different from the first warning signal. The first and second warning signal may be various warning signals, including optical warning signals and/or acoustical warning signals. The first and second warning signals may be output via an output unit 60 or a warning unit 70 of the system. In particular, a separate warning unit 70 does not necessarily need to be provided if warning signals may also be output via the output unit 60 of the system.

While, in the method shown in Fig. 5, a warning signal is output in dependence on the road segment passage restriction information of the active road segment, in a variant method (not shown), warning signals may be output for a plurality of road segments. In particular, if a plurality of road segments is displayed on a screen 61 of the output unit 60, the steps 303-306 indicated in Fig. 5 may be performed for each road segment of the set of road segments displayed on the screen 61. The warning signals can then be output using the same screen 61, e.g., as icons or symbols associated with the different road segments, or using another scheme for coding information.

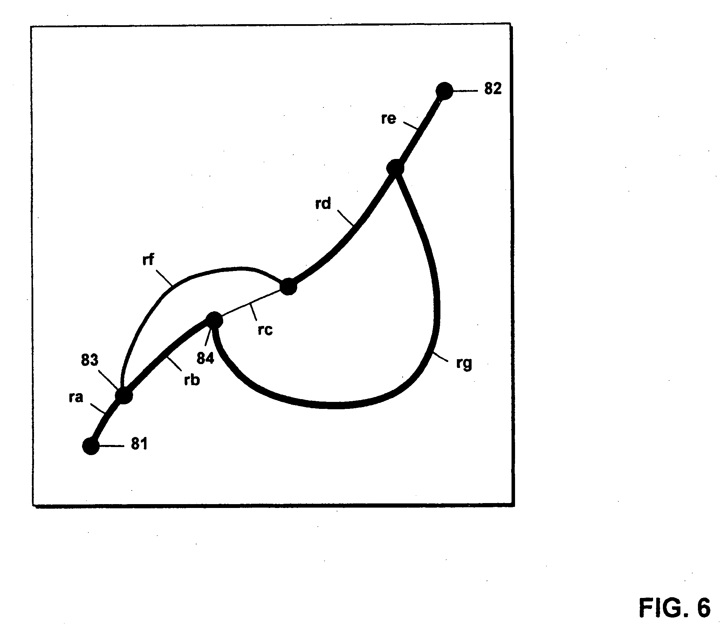

For example, road segments may be coloured differently, in dependence on whether the vehicle passage restriction data exceeds both the first and the second passage threshold value of a respective road segment, whether the vehicle passage restriction data is comprised in the interval defined by these threshold values, or whether the vehicle passage restriction data is smaller than both of these threshold values. Alternatively, the line thickness of the lines representing road segments on the screen 61 of the output unit 60 may be changed in dependence on the vehicle passage restriction data and the corresponding road segment passage restriction information. In Fig. 6, such a coding is exemplarily illustrated for the road network of Fig. 2 for the case that, e.g., the vehicle has a vertical height that exceeds the vertical clearance of road segment rc, and that is smaller than the vertical clearance of road segment rf, but exceeds the second passage threshold value thereof, and that is smaller than the second passage threshold values of all remaining road segments. In this case, the road segments rc and rf are indicated by lines that are thinner than all other lines, the line representing road segment rc being thinner than the line representing road segment rf. Various other schemes for encoding passage restriction information are conceivable.

It should be noted that, in the methods and systems for warning a driver of a vehicle described with reference to Figs. 5 and 6 above, warning signals are output in dependence on both the vehicle passage restriction data and the road segment passage restriction information, making it possible to output a warning signal to the driver in dependence on the parameters specific for his/her vehicle.

It should further be noted that, while the vehicle passage restriction data and the road segment passage restriction information have frequently been exemplified as a vehicle height and a vertical clearance, respectively, in the above description, the vehicle passage restriction data and road segment passage restriction information are not restricted thereto. In particular, both the vehicle passage restriction data and the road segment passage restriction information may comprise several numbers representing different passage restrictions. For example, the vehicle passage restriction data may be a number array comprising a vehicle height, a vehicle width, a vehicle length and a vehicle weight. The road segment passage restriction information for each road segment may be a number array comprising a vertical clearance, a lane width, a curvature radius and a weight restriction. In such a case, the methods and systems described above, may be easily adapted such that, for each road segment, all different passage restrictions are taken into consideration by subsequently performing the steps indicated in Figs. 3-5 above for each one of these different restrictions.

While, in the embodiments described above, the vehicle passage restriction data is a numerical value that is directly compared with road segment passage restriction information, the determination of a route or the outputting of a warning signal based on both the vehicle passage restriction data and the road segment passage restriction information according to the present invention may also involve mathematical operations that are more complex than comparing the vehicle passage restriction data and the road segment passage restriction information. For example, the vehicle passage restriction data may comprise a vehicle axle base and a vehicle length, from which a minimum turning circle radius of the vehicle is computed and subsequently compared with a road segment curvature radius. In another example, the vehicle passage restriction data may be a binary value which indicates whether a trailer is coupled to the vehicle or not, a vehicle length and a vehicle turning circle radius being computed based on this binary value and subsequently compared with a road segment curvature radius.

Further, it should be noted, that the vehicle passage restriction data does not necessarily need to be input by a user using the input unit 50. Rather, one or several detection means for determining the vehicle passage restriction data may be provided. An example for such detection means is a sensor that automatically determines whether a trailer is coupled to a tow bar of a vehicle, which in turn allows the vehicle length to be determined. The detection means may also comprise distance measuring devices for automatically determining a vehicle height or a vehicle length. Further, the detection means does not necessarily need to be provided on the vehicle itself, but can also be external thereto. For example, a scale may be provided for determining the vehicle weight and for automatically transmitting the weight thus determined to the system shown in Fig. 1.

Summarizing, the invention allows the calculation of optimum routes taking into account vehicle-dependent information. For each vehicle the optimum route to a predetermined destination can be calculated.

## Claims

1. A method for determining a route from a start point to a destination for a vehicle,
comprising the steps of
- providing road segment passage restriction information (pth1, pth2) for a plurality of road segments (ra-rg),
- providing vehicle passage restriction data (vp) characterizing said vehicle, and
- determining a route from said start point to said destination for said vehicle based on both the vehicle passage restriction data and the road segment passage restriction information,
wherein the step of determining a route comprises the step of determining a first passage threshold value (pth1) and a second passage threshold value (pth2) of a road segment based on the passage restriction information of said road segment,
**characterized in that**
said first passage threshold value (pth1) and said second passage threshold value (pth2) relate to the same vehicle parameter, and
the route is determined based on the vehicle passage restriction data (vp) and each one of said first and second passage threshold values (pth1, pth2) of said road segment.

2. The method according to claim 1,
**characterized in that**
the step of determining a route comprises a computation of a cost function based on road segment weighting factors, and further comprises the steps of
- comparing the vehicle passage restriction data (vp) with the passage restriction information (pth1, pth2) of a road segment (ra-rg), and
- adjusting the weighting factor of said road segment (ra-rg) in dependence on the result of said comparing.

3. The method according to claim 2,
**characterized in that**,
in the step of adjusting the weighting factor, the weighting factor is adjusted in dependence on a comparison of the vehicle passage restriction data (vp) with each one of said first and second passage threshold values (pth1, pth2) of said road segment (ra-rg).

4. The method according to claim 3,
**characterized in that**
the weighting factor of said road segment (ra-rg) is not adjusted if the vehicle passage restriction data (vp) is smaller than the smaller one (pth2) of said first and second passage threshold values (pth1, pth2) of said road segment (ra-rg) .

5. The method according to claim 3 or claim 4,
**characterized in that**
the weighting factor of said road segment (ra-rg) is increased if the vehicle passage restriction data (vp) is larger than the larger one (pth1) of said first and second passage threshold values (pth1, pth2) of said road segment (ra-rg).

6. The method according to any one of claims 1-5,
**characterized by** the steps of
- determining whether the vehicle passage restriction data (vp) is set to a new value,
- if the vehicle passage restriction data (vp) is set to a new value, comparing the new value of the vehicle passage restriction data (vp) with passage restriction information (pth1, pth2) of remaining road segments of an active route, and
- initiating a new determination of a route, depending on the result of said comparing of the new value of the vehicle passage restriction data (vp).

7. A method for warning a driver of a vehicle,
comprising the steps of
- providing road segment passage restriction information (pth1, pth2) for a road segment (ra-rg),
- providing vehicle passage restriction data (vp) characterizing said vehicle,
- comparing the vehicle passage restriction data (vp) with said passage restriction information (pth1, pth2) of said road segment (ra-rg), and
- outputting a warning signal, depending on the result of said comparing,
wherein said step of comparing comprises determining a first passage threshold value (pth1) and a second passage threshold value (pth2) based on the passage restriction information of said road segment,
**characterized in that**
said first passage threshold value (pth1) and said second passage threshold value (pth2) relate to the same vehicle parameter, and
that the vehicle passage restriction data (vp) is compared with each one of said first and second passage threshold values (pth1, pth2) of said road segment (ra-rg), and said warning signal is output in dependence on the results of both comparisons.

8. The method according to claim 7,
**characterized by** the step of
- determining an active road segment (ra-rg) on which the vehicle is located or which the vehicle is approaching, wherein said step of comparing is performed for said active road segment (ra-rg).

9. The method according to claim 7 or 8,
**characterized by** the step of
- determining a set of road segments (ra-rg) displayed on an optical output device (61),
wherein the steps of comparing and outputting are performed for each road segment of said set of road segments (ra-rg).

10. The method according to any one of claims 7 - 9,
**characterized in that**
the warning signal is a visible warning signal and/or an audible warning signal.

11. The method according to any one of claims 7 - 10,
**characterized in that**
a first warning signal is output if the vehicle passage restriction data (vp) is larger than each one of said first and second passage threshold values (pth1, pth2).

12. The method according to any one of claims 7-11,
**characterized in that**
a second warning signal different from said first warning signal is output if the vehicle passage restriction data (vp) is smaller than the larger one (pth1) of said first and second passage threshold values (pth1, pth2) and larger than the smaller one (pth2) of said first and second passage threshold values (pth1, pth2).

13. The method according to any one of the preceding claims,
**characterized in that**
said road segment passage restriction information (pth1, pth2) is selected from a group comprising a vertical clearance, a horizontal clearance, a curvature radius, a lane width, or a weight restriction.

14. The method according to any one of the preceding claims,
**characterized in that**
said vehicle passage restriction data (vp) is selected from a group comprising a vehicle height, a vehicle width, a vehicle axle base and/or number of axles, a vehicle length, a vehicle turning circle radius, or a vehicle weight.

15. The method according to any one of the preceding claims,
**characterized by** the step of
- receiving said vehicle passage restriction data (vp) from a user.

16. The method according to any one of claims 1 - 14,
**characterized by** the step of
- automatically determining said vehicle passage restriction data (vp).

17. A system for route determination for a vehicle, comprising
- a first storage unit (10) containing road segment passage restriction information (pth1, pth2),
- a second storage unit (20) containing vehicle passage restriction data (vp) characterizing said vehicle,
- a working memory unit (30) for storing a subset of said road segment passage restriction information (pth1, pth2) and said vehicle passage restriction data (vp), and
- a processing unit (40) coupled to the working memory unit (30) and adapted to determine a route from a start point to a destination based on both the road segment passage restriction information (pth1, pth2) and the vehicle passage restriction data (vp),
wherein the processing unit (40) is adapted to determine a first passage threshold value (pth1) and a second passage threshold value (pth2) of a road segment (ra-rg) based on the passage restriction information of said road segment,
**characterized in that**
said first passage threshold value (pth1) and said second passage threshold value (pth2) relate to the same vehicle parameter, and
that said processing unit (40) is adapted to determine a route from said start point to said destination in dependence on said vehicle passage restriction data (vp) and each one of said first and second passage threshold values (pth1, pth2) of said road segment (ra-rg).

18. The system according to claim 17,
**characterized by**
- a third storage unit (10) containing road segment weighting factors,
wherein the working memory unit (30) is further adapted to store a subset of said road segment weighting factors, and the processing unit (40) is adapted to adjust the weighting factor of a given road segment (ra-rg) stored in said working memory unit (30) in dependence on the result of a comparison of said vehicle passage restriction data (vp) with the passage restriction information (pth1, pth2) of said given road segment.

19. The system according to claim 17 or claim 18,
**characterized by**
detection means for automatically determining said vehicle passage restriction data (vp), and
means for transferring the vehicle passage restriction data (vp) determined by the detection means to said second storage unit (20).

20. The system according to claim 19,
**characterized in that**
said detection means comprises means for automatically determining whether a trailer is coupled to a tow bar of the vehicle.

21. The system according to any one of claims 17-20,
**characterized in that**
the system is adapted to perform the method according to any one of claims 1-6.

22. A system for warning a driver of a vehicle,
comprising
- a first storage unit (10) containing road segment passage restriction information (pth1, pth2),
- a second storage unit (20) containing vehicle passage restriction data (vp) characterizing said vehicle,
- a working memory unit (30) for storing road segment passage restriction information (pth1, pth2) of at least one road segment (ra-rg) and said vehicle passage restriction data (vp),
- a processing unit (40) coupled to said working memory unit (30) and adapted to compare passage restriction information (pth1, pth2) of said road segment (ra-rg) with said vehicle passage restriction data (vp), and
- an output unit (60, 70) coupled to the processing unit (40) to receive a control signal therefrom and adapted to output a warning signal based on the control signal,
wherein the processing unit (40) is adapted to determine a first passage threshold value (pth1) and a second passage threshold value (pth2) of said road segment (ra-rg) based on the passage restriction information of said road segment (ra-rg),
**characterized in that**
said first passage threshold value (pth1) and said second passage threshold value (pth2) relate to the same vehicle parameter, and
that the processing unit (40) is further adapted to compare the vehicle passage restriction data (vp) with each one of said first and second passage threshold values (pth1, pth2) of said road segment (ra-rg) and to output said control signal in dependence on the results of both comparisons, wherein the output unit (60, 70) is adapted to output a first warning signal or a second warning signal, depending on the received control signal.

23. The system according to claim 22,
**characterized by**
position determining means for determining a current vehicle position and adapted to provide said current vehicle position to said processing unit (40), wherein the processing unit (40) is adapted to determine an active road segment on which the vehicle is located or which the vehicle is approaching, and to compare the vehicle passage restriction data (vp) with the passage restriction information (pth1, pth2) of said active road segment.

24. The system according to claim 22 or 23,
**characterized in that**
the output unit is a screen (61) of a navigation device.

25. The system according to claim 22 or 23,
**characterized in that**
the output unit is an acoustical output device.

26. The system according to any one of claims 22 - 25,
**characterized in that**
the system is adapted to perform the method according to any one of claims 7-12.

## Patentansprüche

1. Verfahren zum Bestimmen einer Route von einem Startpunkt zu einem Ziel für ein Fahrzeug, umfassend die Schritte:
- Bereitstellen von Straßensegment-Durchfahrtsbeschränkungsinformationen (pth1, pth2) für eine Mehrzahl von Straßensegmenten (ra-rg),
- Bereitstellen von Fahrzeug-Durchfahrtsbeschränkungsdaten (vp), die das Fahrzeug beschreiben, und
- Ermitteln einer Route von dem Startpunkt zu dem Ziel für das Fahrzeug abhängig von den Fahrzeug-Durchfahrtsbeschränkungsdaten und den Straßensegment-Durchfahrtsbeschränkungsinformationen,
wobei der Schritt des Bestimmens einer Route den Schritt Bestimmen eines ersten Durchfahrtsgrenzwerts (pth1) und eines zweiten Durchfahrtsgrenzwerts (pth2) eines Straßensegments abhängig von den Durchfahrtsbeschränkungsinformationen des Straßensegments umfasst,
**dadurch gekennzeichnet,**
**dass** sich der erste Durchfahrtsgrenzwert (pth1) und der zweite Durchfahrtsgrenzwert (pth2) auf denselben Fahrzeugparameter beziehen, und
**dass** die Route abhängig von den Fahrzeug-Durchfahrtsbeschränkungsdaten (vp) und sowohl dem ersten als auch dem zweiten Durchfahrtsgrenzwert (pth1, pth2) des Straßensegments ermittelt wird.

2. Verfahren nach Anspruch 1,
**dadurch gekennzeichnet,**
**dass** der Schritt des Bestimmens einer Route ein Berechnen einer Kostenfunktion abhängig von Gewichtungsfaktoren für Straßensegmente und weiterhin die Schritte
- Vergleichen der Fahrzeug-Durchfahrtsbeschränkungsdaten (vp) mit der Durchfahrtsbeschränkungsinformation (pth1, pth2) eines Straßensegments (ra-rg) und
- Anpassen des Gewichtungfaktors des Straßensegments (ra-rg) abhängig von dem Ergebnis des Vergleichs
umfasst.

3. Verfahren nach Anspruch 2,
**dadurch gekennzeichnet,**
**dass** in dem Schritt des Anpassens des Gewichtungsfaktors der Gewichtungsfaktor abhängig von einem Vergleich der Fahrzeug-Durchfahrtsbeschränkungsdaten (vp) mit jedem von dem ersten und dem zweiten Durchfahrtsgrenzwert (pth1, pth2) des Straßensegments (ra-rg) angepasst wird.

4. Verfahren nach Anspruch 3,
**dadurch gekennzeichnet,**
**dass** der Gewichtungsfaktor des Straßensegments (ra-rg) nicht angepasst wird, falls die Fahrzeug-Durchfahrtsbeschränkungsdaten (vp) kleiner als der kleinere (pth2) von dem ersten und dem zweiten Durchfahrtsgrenzwert (pth1, pth2) des Straßensegments (ra-rg) ist.

5. Verfahren nach Anspruch 3 oder Anspruch 4,
**dadurch gekennzeichnet,**
**dass** der Gewichtungsfaktor des Straßensegments (ra-rg) erhöht wird, falls die Fahrzeug-Durchfahrtsbeschränkungsdaten (vp) größer als der größere (pth1) von dem ersten und dem zweiten Durchfahrtsgrenzwert (pth1, pth2) des Straßensegments (ra-rg) ist.

6. Verfahren nach einem der Ansprüche 1-5,
**gekennzeichnet durch** die Schritte
- Bestimmen, ob die Fahrzeug-Durchfahrtsbeschränkungsdaten (vp) auf einen neuen Wert gesetzt werden,
- falls die Fahrzeug-Durchfahrtsbeschränkungsdaten (vp) auf einen neuen Wert gesetzt werden, Vergleichen des neuen Werts der Fahrzeug-Durchfahrtsbeschränkungsdaten (vp) mit Durchfahrtsbeschränkungsinformationen (pth1, pth2) verbleibender Straßensegmente einer aktiven Route und
- Einleiten einer neuen Routenbestimmung abhängig von dem Ergebnis des Vergleichens des neuen Werts der Fahrzeug-Durchfahrtsbeschränkungsdaten (vp).

7. Verfahren zum Warnen eines Fahrers eines Fahrzeugs, umfassend die Schritte:
- Bereitstellen von Straßensegment-Durchfahrtsbeschränkungsinformationen (pth1, pth2) für ein Straßensegment (ra-rg),
- Bereitstellen von Fahrzeug-Durchfahrtsbeschränkungsdaten (vp), die das Fahrzeug beschreiben,
- Vergleichen der Fahrzeug-Durchfahrtsbeschränkungsdaten (vp) mit den Durchfahrtsbeschränkungsinformationen (pth1, pth2) des Straßensegments (ra-rg) und
- Ausgeben eines Warnsignals in Abhängigkeit von einem Ergebnis des Vergleich-Schritts,
wobei der Vergleich-Schritt ein Bestimmen eines ersten Durchfahrtsgrenzwerts (pth1) und eines zweiten Durchfahrtsgrenzwerts (pth2) abhängig von den Durchfahrtsbeschränkungsinformationen des Straßensegments umfasst, **dadurch gekennzeichnet,**
**dass** sich der erste Durchfahrtsgrenzwert (pth1) und der zweite Durchfahrtsgrenzwert (pth2) auf denselben Fahrzeugparameter beziehen, und
**dass** die Fahrzeug-Durchfahrtsbeschränkungsdaten (vp) sowohl mit dem ersten als auch mit dem zweiten Durchfahrtsgrenzwert (pth1, pth2) des Straßensegments (ra-rg) verglichen werden, und dass das Warnsignal abhängig von den Resultaten beider Vergleiche ausgegeben wird.

8. Verfahren nach Anspruch 7,
**gekennzeichnet durch** den Schritt
- Bestimmen eines aktiven Straßensegments (ra-rg), auf dem das Fahrzeug positioniert ist oder dem sich das Fahrzeug nähert, wobei der Vergleich-Schritt für das aktive Straßensegment (ra-rg) durchgeführt wird.

9. Verfahren nach Anspruch 7 oder 8,
**gekennzeichnet durch** den Schritt
- Bestimmen einer Gruppe von Straßensegmenten (ra-rg), die auf einer optischen Ausgabeeinrichtung (61) angezeigt werden,
wobei die Schritte des Vergleichens und Ausgebens für jedes Straßensegment der Gruppe von Straßensegmenten (ra-rg) durchgeführt werden.

10. Verfahren nach einem der Ansprüche 7-9,
**dadurch gekennzeichnet,**
**dass** das Warnsignal ein sichtbares Warnsignal und/oder ein hörbares Warnsignal ist.

11. Verfahren nach einem der Ansprüche 7-10,
**dadurch gekennzeichnet,**
**dass** ein erstes Warnsignal ausgegeben wird, falls die Fahrzeug-Durchfahrtsbeschränkungsdaten (vp) größer als jeder von dem ersten und dem zweiten Durchfahrtsgrenzwert (pth1, pth2) sind.

12. Verfahren nach einem der Ansprüche 7-11,
**dadurch gekennzeichnet,**
**dass** ein zweites Warnsignal, das von dem ersten Warnsignal verschieden ist, ausgegeben wird, falls die Fahrzeug-Durchfahrtsbeschränkungsdaten (vp) kleiner als der größere (pth1) von dem ersten und dem zweiten Durchfahrtsgrenzwert (pth1, pth2) ist und größer als der kleinere (pth2) von dem ersten und dem zweiten Durchfahrtsgrenzwert (pth1, pth2) ist.

13. Verfahren nach einem der vorhergehenden Ansprüche,
**dadurch gekennzeichnet,**
**dass** die Straßensegment-Durchfahrtsbeschränkungsinformationen (pth1, pth2) ausgewählt sind aus einer Gruppe umfassend eine lichte Höhe, eine lichte Breite, einen Krümmungsradius, eine Fahrbahnbreite oder eine Gewichtsbeschränkung.

14. Verfahren nach einem der vorhergehenden Ansprüche,
**dadurch gekennzeichnet,**
**dass** die Fahrzeug-Durchfahrtsbeschränkungsdaten (vp) ausgewählt sind aus einer Gruppe umfassend eine Fahrzeughöhe, eine Fahrzeugbreite, einen Achsstand und/oder eine Anzahl von Achsen des Fahrzeugs, eine Fahrzeuglänge, einen Wendekreisradius des Fahrzeugs oder ein Fahrzeuggewicht.

15. Verfahren nach einem der vorhergehenden Ansprüche, **gekennzeichnet durch** den Schritt
- Empfangen der Fahrzeug-Durchfahrtsbeschränkungsdaten (vp) von einem Benutzer.

16. Verfahren nach einem der Ansprüche 1-14,
**gekennzeichnet durch** den Schritt
- automatisches Bestimmen der Fahrzeug-Durchfahrtsbeschränkungsdaten (vp).

17. System zum Bestimmen einer Route für ein Fahrzeug, umfassend:
- eine erste Speichereinheit (10), die Straßensegment-Durchfahrtsbeschränkungsinformationen (pth1, pth2) enthält,
- eine zweite Speichereinheit (20), die Fahrzeug-Durchfahrtsbeschränkungsdaten (vp) enthält, die das Fahrzeug beschreiben,
- eine Arbeitsspeichereinheit (30) zum Speichern einer Teilmenge der Straßensegment-Durchfahrtsbeschränkungsinformationen (pth1, pth2) und der Fahrzeug-Durchfahrtsbeschränkungsdaten (vp) und
- eine Verarbeitungseinheit (40), die mit der Arbeitsspeichereinheit (30) gekoppelt und eingerichtet ist, um eine Route von einem Startpunkt zu einem Ziel abhängig von den Straßensegment-Durchfahrtsbeschränkungsinformationen (pth1, pth2) und den Fahrzeug-Durchfahrtsbeschränkungsdaten (vp) zu bestimmen,
wobei die Verarbeitungseinheit (40) eingerichtet ist, um einen ersten Durchfahrtsgrenzwert (pth1) und einen zweiten Durchfahrtsgrenzwert (pth2) eines Straßensegments (ra-rg) abhängig von den Durchfahrtsbeschränkungsinformationen des Straßensegments zu bestimmen,
**dadurch gekennzeichnet,**
**dass** sich der erste Durchfahrtsgrenzwert (pth1) und der zweite Durchfahrtsgrenzwert (pth2) auf denselben Fahrzeugparameter beziehen, und
**dass** die Verarbeitungseinheit (40) eingerichtet ist, um eine Route von dem Startpunkt zu dem Ziel abhängig von den Fahrzeug-Durchfahrtsbeschränkungsdaten (vp) und sowohl dem ersten als auch dem zweiten Durchfahrtsgrenzwert (pth1, pth2) des Straßensegments (ra-rg) zu ermitteln.

18. System nach Anspruch 17,
**gekennzeichnet durch**
- eine dritte Speichereinheit (10), die Gewichtungsfaktoren für Straßensegmente enthält,
wobei die Arbeitsspeichereinheit (30) weiterhin eingerichtet ist, um eine Teilmenge der Gewichtungsfaktoren für Straßensegmente zu speichern, und wobei die Verarbeitungseinheit (40) eingerichtet ist, um den Gewichtungsfaktor eines bestimmten Straßensegments (ra-rg), der in der Arbeitsspeichereinheit (30) gespeichert ist, abhängig von dem Ergebnis eines Vergleichs der Fahrzeug-Durchfahrtsbeschränkungsdaten (vp) mit den Durchfahrtsbeschränkungsinformationen (pth1, pth2) des bestimmten Straßensegments anzupassen.

19. System nach Anspruch 17 oder Anspruch 18,
**gekennzeichnet durch**
Detektionsmittel zum automatischen Bestimmen der Fahrzeug-Durchfahrtsbeschränkungsdaten (vp) und
Mittel zum Übertragen der **durch** die Detektionsmittel ermittelten Fahrzeug-Durchfahrtsbeschränkungsdaten (vp) zu der zweiten Speichereinheit (20).

20. System nach Anspruch 19,
**dadurch gekennzeichnet,**
**dass** die Detektionsmittel Mittel zum automatischen Bestimmen, ob ein Anhänger mit einer Zugstange des Fahrzeugs gekoppelt ist, umfassen.

21. System nach einem der Ansprüche 17-20,
**dadurch gekennzeichnet, dass** das System eingerichtet ist, um das Verfahren nach einem der Ansprüche 1-6 durchzuführen.

22. System zum Warnen eines Fahrers eines Fahrzeugs, umfassend
- eine erste Speichereinheit (10), die Straßensegment-Durchfahrtsbeschränkungsinformationen (pth1, pth2) enthält,
- eine zweite Speichereinheit (20), die Fahrzeug-Durchfahrtsbeschränkungsdaten (vp), die das Fahrzeug beschreiben, enthält,
- eine Arbeitsspeichereinheit (30) zum Speichern von Straßensegment-Durchfahrtsbeschränkungsinformationen (pth1, pth2) wenigstens eines Straßensegments (ra-rg) und der Fahrzeug-Durchfahrtsbeschränkungsdaten (vp),
- eine Verarbeitungseinheit (40), die mit der Arbeitsspeichereinheit (30) gekoppelt ist und eingerichtet ist, um Durchfahrtsbeschränkungsinformationen (pth1, pth2) des Straßensegments (ra-rg) mit den Fahrzeug-Durchfahrtsbeschränkungsdaten (vp) zu vergleichen, und
- eine Ausgabeeinheit (60, 70), die mit der Verarbeitungseinheit (40) gekoppelt ist, um von dieser ein Steuersignal zu empfangen, und die eingerichtet ist, um abhängig von dem Steuersignal ein Warnsignal auszugeben,
wobei die Verarbeitungseinheit (40) eingerichtet ist, um einen ersten Durchfahrtsgrenzwert (pth1) und einen zweiten Durchfahrtsgrenzwert (pth2) des Straßensegments (ra-rg) abhängig von den Durchfahrtsbeschränkungsinformationen des Straßensegment (ra-rg) zu bestimmen,
**dadurch gekennzeichnet,**
**dass** sich der erste Durchfahrtsgrenzwert (pth1) und der zweite Durchfahrtsgrenzwert (pth2) auf denselben Fahrzeugparameter beziehen, und
**dass** die Verarbeitungseinheit (40) weiterhin eingerichtet ist, um die Fahrzeug-Durchfahrtsbeschränkungsdaten (vp) sowohl mit dem ersten als auch mit dem zweiten Durchfahrtsgrenzwert (pth1, pth2) des Straßensegments (ra-rg) zu vergleichen, und um das Steuersignal abhängig von den Ergebnissen beider Vergleiche auszugeben, wobei die Ausgabeeinheit (60, 70) eingerichtet ist, um abhängig von dem empfangenen Steuersignal ein erstes Warnsignal oder ein zweites Warnsignal auszugeben.

23. System nach Anspruch 22,
**gekennzeichnet durch**
Positionsbestimmungsmittel zum Bestimmen einer aktuellen Fahrzeugposition, welche eingerichtet sind, um die aktuelle Fahrzeugposition an die Verarbeitungseinheit (40) bereitzustellen, wobei die Verarbeitungseinheit (40) eingerichtet ist, um ein aktives Straßensegment, auf dem das Fahrzeug positioniert ist oder dem sich das Fahrzeug nähert, zu bestimmen, und um die Fahrzeug-Durchfahrtsbeschränkungsdaten (vp) mit den Durchfahrtsbeschränkungsinformationen (pth1, pth2) des aktiven Straßensegments zu vergleichen.

24. System nach Anspruch 22 oder 23,
**dadurch gekennzeichnet,**
**dass** die Ausgabeeinheit ein Bildschirm (61) einer Navigationseinrichtung ist.

25. System nach Anspruch 22 oder 23,
**dadurch gekennzeichnet,**
**dass** die Ausgabeeinheit eine akustische Ausgabeeinrichtung ist.

26. System nach einem der Ansprüche 22-25,
**dadurch gekennzeichnet,**
**dass** das System eingerichtet ist, um das Verfahren nach einem der Ansprüche 7-12 durchzuführen.

## Revendications

1. Procédé de détermination d'itinéraire à partir d'un point de départ vers une destination pour un véhicule, comprenant les étapes
- de fourniture d'informations de restriction de passage (pth1, pth2) de segment de route pour une pluralité de segments de route (ra-rg),
- de fourniture de données de restriction de passage de véhicule (vp) caractérisant ledit véhicule, et de
- de détermination d'itinéraire à partir dudit point de départ vers ladite destination pour ledit véhicule à base aussi bien des données de restriction de passage de véhicule que des informations de restriction de passage de segment de route,
dans lequel l'étape de détermination d'itinéraire comprend l'étape de détermination d'une première valeur de seuil de passage (pth1) et d'une deuxième valeur de seuil de passage (pth2) d'un segment de route à base des informations de restriction de passage dudit segment de route,
**caractérisé en ce que**
ladite première valeur de seuil de passage (pth1) et ladite deuxième valeur de seuil de passage (pth2) concernent le même paramètre de véhicule, et
l'itinéraire est déterminé à base des données de restriction de passage de véhicule (vp) et de chacune desdites première et deuxième valeurs de seuil de passage (pth1, pth2) dudit segment de route.

2. Procédé selon la revendication 1, **caractérisé en ce que** l'étape de détermination d'itinéraire comprend un calcul d'une fonction de coûts à base de facteurs de pondération de segment de route, et comprend en outre les étapes
- de comparaison des données de restriction de passage de véhicule (vp) avec les informations de restriction de passage (pth1, pth2) de segment de route (ra-rg), et
- d'ajustage du facteur de pondération dudit segment de route (ra-rg) en fonction du résultat de ladite comparaison.

3. Procédé selon la revendication 2, **caractérisé en ce que**, à l'étape d'ajustage du facteur de pondération, le facteur de pondération est ajusté en fonction d'une comparaison des données de restriction de passage de véhicule (vp) avec chacune desdites première et deuxième valeurs de seuil de passage (pth1, pth2) dudit segment de route (ra-rg).

4. Procédé selon la revendication 3, **caractérisé en ce que** le facteur de pondération dudit segment de route (ra-rg) n'est pas ajusté si les données de restriction de passage de véhicule (vp) sont inférieures à la valeur inférieure (pth2) desdites première et deuxième valeurs de seuil de passage (pth1, pth2) dudit segment de route (ra-rg).

5. Procédé selon la revendication 3 ou 4, **caractérisé en ce que** le facteur de pondération dudit segment de route (ra-rg) est augmenté si les données de restriction de passage de véhicule (vp) sont supérieures à la valeur supérieure (pth1) desdites première et deuxième valeurs de seuil de passage (pth1, pth2) dudit segment de route (ra-rg).

6. Procédé selon l'une quelconque des revendications 1-5, **caractérisé par** les étapes
- de détermination si les données de restriction de passage de véhicule (vp) sont fixées à une nouvelle valeur,
- si les données de restriction de passage de véhicule (vp) sont fixées à une nouvelle valeur, de comparaison de la nouvelle valeur des données de restriction de passage de véhicule (vp) avec les informations de restriction de passage (pth1, pth2) de segments de route restants d'un itinéraire actif, et
- d'initiation d'une nouvelle détermination d'itinéraire en fonction du résultat de ladite comparaison de la nouvelle valeur des données de restriction de passage de véhicule (vp).

7. Procédé d'avertissement d'un conducteur d'un véhicule, comprenant les étapes
- de fourniture d'informations de restriction de passage (pth1, pth2) de segment de route pour un segment de route (ra-rg),
- de fourniture de données de restriction de passage de véhicule (vp) caractérisant ledit véhicule,
- de comparaison des données de restriction de passage de véhicule (vp) avec lesdites informations de restriction de passage (pth1, pth2) dudit segment de route (ra-rg), et
- d'émission d'un signal d'avertissement en fonction du résultat de ladite comparaison,
dans lequel ladite étape de comparaison comprend la détermination d'une première valeur de seuil de passage (pth1) et d'une deuxième valeur de seuil de passage (pth2) à base des informations de restriction de passage dudit segment de route,
**caractérisé en ce que**
ladite première valeur de seuil de passage (pth1) et ladite deuxième valeur de seuil de passage (pth2) concernent le même paramètre de véhicule, et
que les données de restriction de passage de véhicule (vp) sont comparées à chacune desdites première et deuxième valeurs de seuil de passage (pth1, pth2) dudit segment de route (ra-rg), et ledit signal d'avertissement est émis en fonction des résultats des deux comparaisons.

8. Procédé selon la revendication 7, **caractérisé par** l'étape
- de détermination d'un segment de route actif (ra-rg) sur lequel est localisé le véhicule ou auquel s'approche le véhicule, ladite étape de comparaison étant effectuée pour ledit segment de route actif (ra-rg).

9. Procédé selon la revendication 7 ou 8, **caractérisé par** l'étape
- de détermination d'un ensemble de segments de route (ra-rg) affiché sur un dispositif de sortie optique (61), dans lequel les étapes de comparaison et d'émission sont effectuées pour chaque segment de route dudit ensemble de segments de route (ra-rg).

10. Procédé selon l'une quelconque des revendications 7-9, **caractérisé en ce que** le signal d'avertissement est un signal d'avertissement visible et/ou un signal d'avertissement audible.

11. Procédé selon l'une quelconque des revendications 7-10, **caractérisé en ce qu'**un premier signal d'avertissement est émis si les données de restriction de passage de véhicule (vp) sont supérieures à chacune desdites première et deuxième valeurs de seuil de passage (pth1, pth2).

12. Procédé selon l'une quelconque des revendications 7-11, **caractérisé en ce qu'**un deuxième signal d'avertissement différent dudit premier signal d'avertissement est émis si les données de restriction de passage de véhicule (vp) sont inférieures à la valeur supérieure (pth1) desdites première et deuxième valeurs de seuil de passage (pth1, pth2) et supérieures à la valeur inférieure (pth2) desdites première et deuxième valeurs de seuil de passage (pth1, pth2).

13. Procédé selon l'une quelconque des revendications précédentes, **caractérisé en ce que** lesdites informations de restriction de passage (pth1, pth2) de segment de route sont sélectionnées parmi un groupe comprenant un gabarit vertical, un gabarit horizontal, un rayon de courbure, une largeur de voie, ou une limitation de poids.

14. Procédé selon l'une quelconque des revendications précédentes, **caractérisé en ce que** lesdites données de restriction de passage de véhicule (vp) sont sélectionnées parmi un groupe comprenant une hauteur de véhicule, une largeur de véhicule, un entraxe de véhicule et/ou un nombre d'axes, une longueur de véhicule, un rayon de cercle de braquage de véhicule, ou un poids de véhicule.

15. Procédé selon l'une quelconque des revendications précédentes, **caractérisé par** l'étape
- de réception desdites données de restriction de passage de véhicule (vp) en provenance d'un utilisateur.

16. Procédé selon l'une quelconque des revendications 1-14, **caractérisé par** l'étape
- de détermination automatique desdites données de restriction de passage de véhicule (vp).

17. Système de détermination d'itinéraire pour un véhicule, comprenant
- une première unité de stockage (10) contenant des informations de restriction de passage (pth1, pth2),
- une deuxième unité de stockage (20) contenant des données de restriction de passage de véhicule (vp) caractérisant ledit véhicule,
- une unité de mémoire de travail (30) pour stocker un sous-ensemble desdites informations de restriction de passage (pth1, pth2) de segment de route et desdites données de restriction de passage de véhicule (vp], et
- une unité de traitement (40) couplée à l'unité de mémoire de travail (30) et adaptée à déterminer un itinéraire à partir d'un point de départ vers une destination à base aussi bien des informations de restriction de passage (pth1, pth2) de segment de route que des données de restriction de passage de véhicule (vp),
dans lequel l'unité de traitement (40) est adaptée pour déterminer une première valeur de seuil de passage (pth1) et une deuxième valeur de seuil de passage (pth2) de segment de route (ra-rg) à base des informations de restriction de passage dudit segment de route,
**caractérisé en ce que**
ladite première valeur de seuil de passage (pth1) et ladite deuxième valeur de seuil de passage (pth2) concernent le même paramètre de véhicule, et
que ladite unité de traitement (40) est adaptée pour déterminer un itinéraire à partir dudit point de départ vers ladite destination en fonction desdites données de restriction de passage de véhicule (vp) et de chacune desdites première et deuxième valeurs de seuil de passage (pth1, pth2) dudit segment de route (ra-rg).

18. Système selon la revendication 17, **caractérisé par**
- une troisième unité de stockage (10) contenant des facteurs de pondération de segment de route,
dans lequel l'unité de mémoire de travail (30) est en outre adaptée pour stocker un sous-ensemble desdits facteurs de pondération de segment de route, et l'unité de traitement (40) est adaptée pour ajuster le facteur de pondération de segment de route donné (ra-rg) stocké dans ladite unité de mémoire de travail (30) en fonction du résultat d'une comparaison desdites données de restriction de passage de véhicule (vp) avec les informations de restriction de passage (pth1, pth2) dudit segment de route donné.

19. Système selon la revendication 17 ou la revendication 18, **caractérisé par**
des moyens de détection pour déterminer automatiquement lesdites données de restriction de passage de véhicule (vp), et
des moyens pour transférer les données de restriction de passage de véhicule (vp) déterminées par les moyens de détection vers ladite unité de stockage (20).

20. Système selon la revendication 19, **caractérisé en ce que** lesdites moyens de détection comprennent des moyens pour déterminer automatiquement si une remorque est couplée à une barre de remorquage du véhicule.

21. Système selon l'une quelconque des revendications 17-20, **caractérisé en ce que** le système est adapté pour exécuter le procédé selon l'une quelconque des revendications 1-6.

22. Système d'avertissement d'un conducteur d'un véhicule, comprenant
- une première unité de stockage (10) contenant des informations de restriction de passage (pth1, pth2) de segment de route,
- une deuxième unité de stockage (20) contenant des données de restriction de passage de véhicule (vp) caractérisant ledit véhicule,
- une unité de mémoire de travail (30) pour stocker les informations de restriction de passage (pth1, pth2) de segment de route d'au moins un segment de route (ra-rg) et lesdites données de restriction de passage de véhicule (vp),
- une unité de travail (40) couplée à ladite unité de mémoire de travail (30) et adaptée pour comparer les informations de restriction de passage (pth1, pth2) dudit segment de route (ra-rg) avec lesdites données de restriction de passage de véhicule (vp), et
- une unité d'émission (60, 70) couplée à l'unité de traitement (40) pour en recevoir un signal de contrôle et adaptée pour émettre un signal d'avertissement à base du signal de contrôle,
dans lequel l'unité de traitement (40) est adaptée pour déterminer une première valeur de seuil de passage (pth1) et une deuxième valeur de seuil de passage (pth2) dudit segment de route (ra-rg) à base des informations de restriction de passage dudit segment de route (ra-rg),
**caractérisé en ce que**
ladite première valeur de seuil de passage (pth1) et ladite deuxième valeur de seuil de passage (pth2) concernent le même paramètre de véhicule, et
que l'unité de traitement (40) est en outre adaptée pour comparer les données de restriction de passage de véhicule (vp) avec chacune desdites première et deuxième valeurs de seuil de passage (pth1, pth2) dudit segment de route (ra-rg) et pour émettre ledit signal de contrôle en fonction des résultats des deux comparaisons, dans lequel l'unité d'émission (60, 70) est adaptée pour émettre un premier signal d'avertissement ou un deuxième signal d'avertissement, en fonction du signal de contrôle reçu.

23. Système selon la revendication 22, **caractérisé par** des moyens pour déterminer une position actuelle de véhicule et adaptés pour fournir ladite position actuelle de véhicule à ladite unité de traitement (40), dans lequel l'unité de traitement (40) est adaptée pour déterminer un segment de route actif sur lequel le véhicule est localisé où auquel le véhicule s'approche, et pour comparer les données de restriction de passage de véhicule (vp) avec les informations de restriction de passage (pth1, pth2) dudit segment de route actif.

24. Système selon la revendication 22 ou 23, **caractérisé en ce que** l'unité de sortie est un écran (61) d'un dispositif de navigation.

25. Système selon la revendication 22 ou 23, **caractérisé en ce que** l'unité de sortie est un dispositif de sortie acoustique.

26. Système selon l'une quelconque des revendications 22-25, **caractérisé en ce que** le système est adapté pour exécuter le procédé selon l'une quelconque des revendications 7-12.
